# EUROPÄISCHE PATENTSCHRIFT

(11) **EP 0 981 689 B1**
(45) Veröffentlichungstag und Bekanntmachung des Hinweises auf die Patenterteilung: **09.11.2005**
(21) Anmeldenummer: 99913242.6
(22) Anmeldetag: 08.03.1999
(51) Int. Cl.: F03D 11/00, F16D 33/18

(54) **HYDRODYNAMISCHE KUPPLUNG FÜR WINDKRAFTANLAGEN**
HYDRODYNAMIC COUPLING FOR WIND PLANTS
ACCOUPLEMENT HYDRODYNAMIQUE POUR EOLIENNES

(30) Priorität: 06.03.1998 DE 19809598
(43) Veröffentlichungstag der Anmeldung: 01.03.2000
(73) Patentinhaber: Voith Turbo GmbH & Co. KG, 89522 Heidenheim (DE)
(72) Erfinder: HOFFELD, Harald, D-74564 Crailsheim (DE)
(74) Vertreter: Dr. Weitzel & Partner
(86) Internationale Anmeldenummer: PCT/EP1999/001491
(87) Internationale Veröffentlichungsnummer: WO 1999/045269

(56) Entgegenhaltungen:
- DE-A- 3 002 804
- GB-A- 1 151 216
- GB-A- 2 120 364

## Beschreibung

Die Erfindung betrifft eine Hydrodynamische Kupplung für Windkraftanlagen.

Hydrodynamische Kupplungen sind aus einer Vielzahl von Dokumenten bekannt geworden. Nur beispielsweise wird auf die folgenden Druckschriften verwiesen:
(1) US 2 875 581
(2) US 3 173 260
(3) DE 32 31 368
(4) GB 1 151 216

Der Einsatz von hydrodynamischen Kupplungen in Windkraftanlagen bringt besondere Probleme mit sich, insbesondere was die Wartung anbetrifft, und zwar wegen der schweren Zugänglichkeit in großen Höhen. Dies betrifft insbesondere die Lager.

Als Arbeitsmittel kommen alle möglichen Flüssigkeiten in Betracht, beispielsweise Wasser oder Öl. Wird Wasser verwendet, so muß selbstverständliche dafür gesorgt werden, daß die Lager gegen den Arbeitsraum abgedichtet sind. Als Lagerschmiermittel wird bei diesem Falle meist Fett verwendet. Handelt es sich bei dem Arbeitsmittel um Öl, so wurde bisher genau dasselbe Öl zur Lagerschmierung verwendet. Dies ist jedoch immer ein Kompromiß, da sich die hydrodynamische Drehmomentübertragung durch dünnflüssiges Öl verbessert, jedoch die Schmierfilmdicke im Wälzkontakt der Lager sich verschlechtert. Dies ist gerade bei geringer Drehzahldifferenz von ausschlaggebender Bedeutung für die Lagerschmierung.

Zur Lagerschmierung kann bei Turbokupplungen auch Fett angewandt werden. Dies kommt dann in Betracht, wenn die Betriebszeit zwischen den Stillständen sehr groß ist; bei Verwendung von Öl als Lagerschmiermittel würde die Ölmenge im Lagerbereich nicht ausreichen. Auch hierbei wurde der Arbeitsraum gegen das Lager abgedichtet, um klare Verhältnisse zu schaffen, und um zu verhindern, daß Öl in das Lager eintritt und die Fettschmierung beeinträchtigt.

Trotz aller Bemühungen kommt es immer wieder zu Problemen bei Lagerungen. Diese Probleme führen bei relativ hohen Lagertemperaturen zu einer geringen Lebensdauer der Lager. Die Verwendung stärkerer Lager ist jedoch durch die Geometrie begrenzt. Die Kühlung der Turbokupplung erfolgt durch einen äußeren Luftstrom, der die gesamte Verlustleistung in Gestalt von Wärme abführt. Eine zusätzliche Kühlung für die Lager wäre bei einer geschlossenen Kupplung von geringer Wirkung, da die Lagerstellen etwa die Temperatur der Turbokupplung annehmen.

Der Erfindung liegt die Aufgabe zugrunde, eine hydrodynamische Kupplung gemäß dem Oberbegriff von Anspruch 1 derart zu gestalten, daß die Lebensdauer der Lager deutlich vergrößert werden kann.

Diese Aufgabe wird durch die kennzeichnenden Merkmale von Anspruch 1 gelöst.

Der Erfinder hat folgendes erkannt: Bei Windkraftanlagen werden die Windflügel von Zeit zu Zeit aus betriebsbedingten Gründen abgestellt, beispielsweise dann, wenn die Windgeschwindigkeit zu hoch ist, oder die die Windflügel tragende Gondel zurückgedreht werden muß, oder zum Zwecke der Wartung der gesamten Windturbine. Der Generator läuft aber nach diesem Abstell-Vorgang noch eine gewisse Zeitspanne weiter. Die Zeitspanne liegt bei 20 bis 30 Sekunden. Während dieser Zeitspanne baut sich im Arbeitsmittel ein Staudruck auf, der genauso groß ist wie beim Anlauf. Dieser kann bis zu 12 bar erreichen, somit einen sehr hohen Wert. Dies hat wiederum zur Folge, daß Arbeitsmittel aus dem Arbeitsraum unter dem genannten hohen Druck auf der Lagerdichtung steht. Dadurch wird die Dichtung beschädigt oder gar zerstört, zumindest die Lebensdauer der Dichtung herabgesetzt. Somit dringt das Arbeitsmittel Öl in das Lager ein und verdrängt von dort das Fett, so daß keine optimalen Schmierbedingungen mehr herrschen.

Der Erfinder hat weiterhin als Lösung erkannt, daß eine ringförmiges Prallblech optimal ist. Dieses Prallblech ist über Distanzscheiben mit axialem Abstand vor dem Wellendichtring befestigt, so daß die über den Spalt (in den Figuren Spalt 6) zu strömende Flüssigkeit radial über den axialen Spalt (in den Figuren Spalt 10) entweichen kann. Hierdurch wird der genannte, auf der Dichtung lastende hohe Druck abgebaut. Es wird jedoch ein minimaler Durchfluß des Öles in Richtung auf die Lagerdichtung zugelassen. Es verbleibt somit zwischen der Innenkante des ringförmigen Prallbleches und der Mantelfläche der Welle ein minimaler Spalt.

Die Erfindung ist anhand der Zeichnungen näher erläutert. Die darin gezeigte hydrodynamische Kupplung ist zum Einsatz bei einer Windturbine vorgesehen. Die Figuren zeigen im einzelnen folgendes:

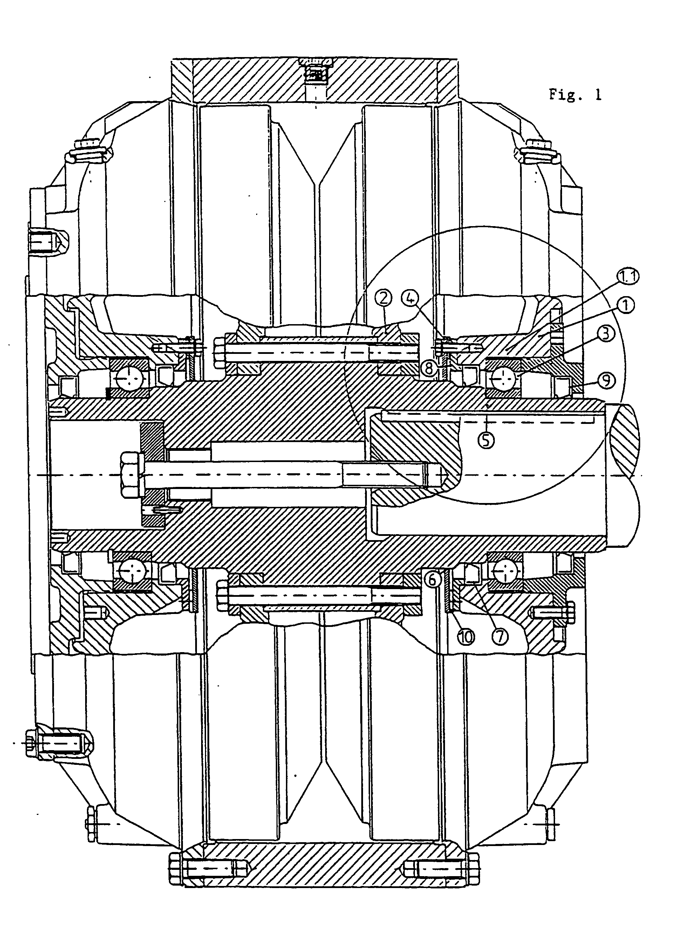

- Fig. 1: zeigt die Kupplung in einem Axialschnitt.

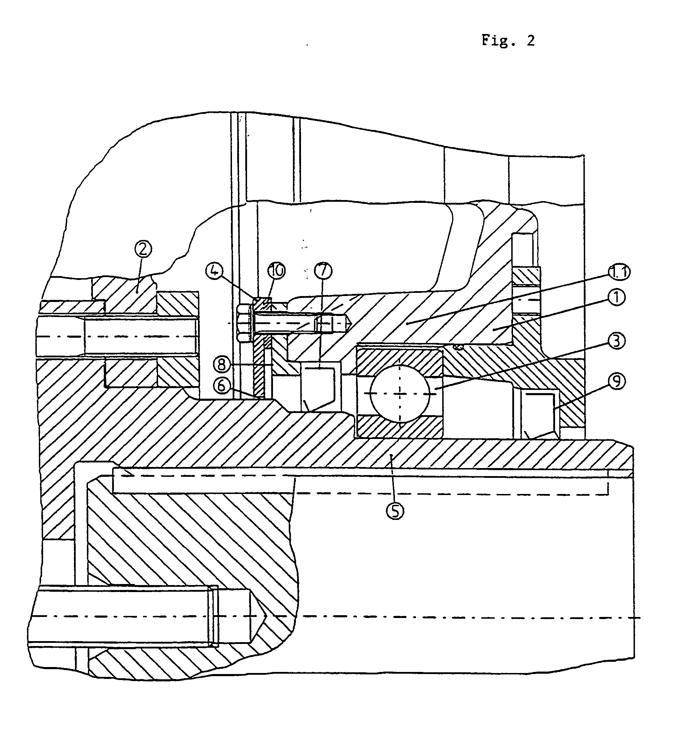

- Fig. 2: zeigt in vergrößertem Maßstab den in Figur 1 mit einem Kreis umrandeten Teil der Kupplung.

Die Kupplung ist in Duplex-Bauweise ausgeführt. Dies bedeutet, daß sie zwei zueinander koaxialer Arbeitskreisläufe aufweist, die parallel wirken. Wegen der Symmetrie der Maschine soll im vorliegenden Falle lediglich die rechte Hälfte näher betrachtet werden. Das dort erkennbare Primärrad 1 ist auf dem Sekundärrad 2 gelagert, und zwar mittels des Lagers 3.

Das entscheidende, erfindungsgemäße Bauteil ist ein Prallblech 4. Dies ist ringförmig. Es umschließt die Abtriebswelle 5. Dabei verbleibt zwischen der Innenkante des Prallbleches 4 und der Mantelfläche der Nabe 5 ein kleiner Spalt. Hierdurch kann zwar ein gewisser minimaler Ölfluß aus dem Arbeitsraum in Richtung auf das Lager 3 hindurchtreten, jedoch wird der Druck des im Arbeitsraum befindlichen Öls weitgehend abgebaut.

Man erkennt ferner eine Dichtung 7. Dabei handelt es sich um eine sogenannte Radialwellendichtung.

Ein weiteres Bauteil ist ein im Querschnitt L-förmiger Ring 8. Dieser ist zusammen mit der Drosselscheibe - an Primärrad 1 beziehungsweise.an einem Lagerhals 1.1 angeflanscht. Sein zur Nabe 5 paralleler Schenkel liegt an Dichtung 7 an und stützt diese ab.

Auch auf der gegenüberliegenden Seite des Lagers 3 ist ein Radialwellen-Dichtring 9 angeordnet. Das Lager ist fettgefüllt, und zwar mit einem Fett auf Esterbasis mit einer besonders hohen Viskosität von 440 cSt.

Aufgrund der erfindungsgemäßen Konstellation des Lagers und dessen Umfeld war es möglich, die Lebensdauer des Lagers von ca. 15000 h auf ca. 50000 h zu steigern.

## Patentansprüche

1. Hydrodynamische Kupplung für Windkraftanlagen;
1.1 mit einem Primärrad (1) und einem Sekundärrad (2);
1.2 Primärrad und Sekundärrad bilden miteinander einen Arbeitsraum;
1.3 das eine (1) der beiden Räder ist mittels wenigstens eines Lagers (3) auf dem anderen (2) der beiden Räder gelagert;
1.4 jedes Lager (3) ist gegen den Arbeitsraum hin abgedichtet;
1.5 das Lager (3) ist fettgeschmiert;
**gekennzeichnet durch** die folgenden Merkmale:
1.6 zwischen Arbeitsraum und Lager (3) ist ein ringförmiges Prallblech (8) vorgesehen, das den Lagerraum weitgehend gegen das im Arbeitsraum enthaltene Betriebsmittel absperrt;
1.7 das Fett im Lagerraum ist ein Fett mit einer Viskosität von über 400 cSt;
1.8 das Prallblech (8) ist über Distanzscheiben mit axialem Abstand/Spalt (10) montiert, wobei der axiale Spalt (10) größer als der radiale Ringspalt (6) ist.

2. Hydrodynamische Kupplung nach Anspruch 1, **dadurch gekennzeichnet, daß** der Dichtung (7) ein Stützring (8) zugeordnet ist, der sich gegen den Dichtring (7) abstützt und diesen axial verpreßt.

3. Hydrodynamische Kupplung nach einem der Ansprüche 1 bis 4, **dadurch gekennzeichnet, daß** ein Fett auf Esterbasis verwendet wird.

## Claims

1. A hydrodynamic coupling for wind-energy power stations;
1.1 with a primary wheel (1) and a secondary wheel (2);
1.2 with the primary wheel and secondary wheel jointly forming a working chamber;
1.3 with one (1) of the two wheels being held by means of at least one bearing (3) on the other (2) of the two wheels;
1.4 with each bearing (3) being sealed towards the working chamber;
1.5 with the bearing (3) being lubricated with grease;
**characterized by** the following features:
1.6 an annular deflector (8) is provided between the working chamber and the bearing (3), which deflector seals the bearing chamber substantially against the operating material contained in the working chamber;
1.7 the grease in the bearing chamber is a grease with a viscosity of over 400 cSt;
1.8 the deflector (8) is mounted by means of spacers with axial distance/gap (10), with the axial gap (10) being larger than the radial annular gap (6).

2. A hydrodynamic coupling according to claim 1, **characterized in that** the seal (7) is associated with a bearing ring (8) which rests against the sealing ring (7) and axially presses the same.

3. A hydrodynamic coupling according to one of the claims 1 or 2, **characterized in that** a grease on the basis of ester is used.

## Revendications

1. Accouplement hydrodynamique pour éoliennes ;
1.1 avec une roue primaire (1) et une roue secondaire (2) ;
1.2 la roue primaire et la roue secondaire formant ensemble un volume de travail ;
1.3 la première (1) des deux roues étant disposée sur l'autre roue (2) au moyen d'au moins un palier (3) ;
1.4 chaque palier (3) étant rendu étanche par rapport au volume de travail ;
1.5 le palier (3) étant lubrifié ;
**caractérisé en ce que** :
1.6 un déflecteur (8) circulaire est disposé entre le volume de travail et le palier (3), ledit déflecteur protégeant amplement le volume de palier d'un moyen d'entraînement contenu dans le volume de travail ;
1.7 la graisse du volume de palier étant une graisse de viscosité supérieure à 400 cSt ;
1.8 le déflecteur (8) étant monté avec une distance axiale/un intervalle axial (10) par l'intermédiaire de disques d'écartement, l'intervalle axial (10) étant plus grand qu'un intervalle annulaire radial (6).

2. Accouplement hydrodynamique selon la revendication 1, **caractérisé en ce qu'**un joint d'étanchéité (7) est associé à une bague d'appui (8) qui s'appuie contre la bague d'étanchéité (7) et la comprime axialement.

3. Accouplement hydrodynamique selon l'une quelconque des revendications 1 ou 2, **caractérisé en ce que** la graisse utilisée est une graisse à base d'esther.
